# EUROPEAN PATENT APPLICATION

(11) **EP 4 691 772 A1**
(43) Date of publication of application: **11.02.2026**
(21) Application number: 24815077.3
(22) Date of filing: 30.04.2024
(51) Int. Cl.: B32B 27/32, B65D 65/40, C08J 5/18, C09J 123/12

(54) **SEALANT FILM, PACKAGING MATERIAL, AND PACKAGE**

(30) Priority: 31.05.2023 JP 2023089399
(71) Applicant: Toppan Holdings Inc., Tokyo 110-0016 (JP)
(72) Inventor: KATSUME, Tomoya, Tokyo 110-0016 (JP); TANAKA, Ryo, Tokyo 110-0016 (JP); TAKAYANAGI, Kosuke, Tokyo 110-0016 (JP)
(74) Representative: Pritzlaff, Stefanie Lydia
(86) International application number: PCT/JP2024/016672
(87) International publication number: WO 2024/247593

(57) **Abstract**

A sealant film includes a first layer that contains a propylene homopolymer (A), a propylene-ethylene random copolymer (B), and an ethylene-α-olefin copolymer elastomer (C), in which a content of the ethylene-α-olefin copolymer elastomer (C) is 17.5 parts by mass or more relative to a total of 100 parts by mass of the propylene homopolymer (A) and the propylene-ethylene random copolymer (B).

## Description

### Technical Field

The present invention relates to a sealant film, a packaging material, and a package. Specifically, the present invention relates to a sealant film that is a polypropylene-based film, has excellent low-temperature sealability and excellent drop bag resistance during low-temperature storage, and is suitably usable as a packaging material even under harsh treatments such as boiling water treatment and retort treatment, and also to a packaging material and a packaging bag obtained using the sealant film.

### Background Art

Since a polypropylene-based unoriented film is excellent in rigidity and heat resistance, and is inexpensive, the polypropylene-based unoriented film may be used as a sealant film in various packaging materials such as food packaging.

In Patent Literature 1, a polypropylene-based film including a crystalline propylene polymer having a melting point of 120 to 165°C, an ethylene-α-olefin copolymer, and a copolymer of ethylene and at least one selected from α-olefins having 3 to 20 carbon atoms, cyclic olefins, and cyclic polyenes is proposed.

### Citation List

### Patent Literature

[Patent Literature 1] Japanese Unexamined Patent Publication No. 2003-119298

### Summary of Invention

### Technical Problem

In recent years, with the aim of improving the recyclability of packaging materials, studies have been conducted on packaging materials with a monomaterial composition, using biaxially oriented polypropylene (OPP) film base material and polypropylene-based unoriented film. However, since OPP films have a lower melting point compared to conventionally used base materials such as biaxially oriented polyamide films (ONy films) and biaxially oriented polyester films (PET films), there is a limitation in that heat sealing cannot be performed at high temperatures during bag-making processing. Therefore, polypropylene-based unoriented films are increasingly required to have low-temperature sealability so that appropriate heat sealing can be performed even at reduced heat seal temperatures.

In addition, packaging materials using an OPP base tend to exhibit inferior drop bag resistance during low-temperature storage compared to those using ONy films or PET films. Therefore, in order to achieve a more practically excellent monomaterial structure of the packaging material, it is required to impart excellent drop bag resistance to other layers constituting the packaging material, particularly the polypropylene-based unoriented film used as the sealant film.

However, it is currently difficult for conventional polypropylene-based unoriented films to achieve both excellent low-temperature sealability and excellent drop bag resistance during low-temperature storage.

The present invention has been made in view of the above-described circumstances, and an object thereof is to provide a sealant film which, although being a polypropylene-based film, is capable of achieving both excellent low-temperature sealability and excellent drop bag resistance during low-temperature storage. The present invention also aims to provide a packaging material and a package obtained using the sealant film.

### Solution to Problem

Aspects of the invention include, for example, the following aspects.
[1] A sealant film including a first layer that contains a propylene homopolymer (A), a propylene-ethylene random copolymer (B), and an ethylene-α-olefin copolymer elastomer (C), in which a content of the ethylene-α-olefin copolymer elastomer (C) is 17.5 parts by mass or more relative to a total of 100 parts by mass of the propylene homopolymer (A) and the propylene-ethylene random copolymer (B).
[2] The sealant film according to [1] including the first layer, and a second layer containing a propylene-ethylene block copolymer (D) and an ethylene-propylene copolymer elastomer (E).
[3] The sealant film according to [1] including the first layer, and a second layer containing a propylene-based polymer and titanium oxide.
[4] The sealant film according to [2] including in this order, the first layer, the second layer, and a third layer containing a propylene homopolymer (A) and a propylene-ethylene random copolymer (B).
[5] The sealant film according to [3], including, in this order, the first layer, the second layer, and a third layer containing a propylene homopolymer (A) and a propylene-ethylene random copolymer (B).
[6] The sealant film according to any one of [1] to [5], in which the content of the ethylene-α-olefin copolymer elastomer (C) is 17.5 to 43 parts by mass based on a total of 100 parts by mass of the propylene homopolymer (A) and the propylene-ethylene random copolymer (B).
[7] A packaging material including the sealant film according to any one of [1] to [6] and a base film containing a propylene-based polymer.
[8] The packaging material according [7], in which the base film has an inorganic oxide layer on at least one surface thereof.
[9] A packaging material comprising, in this order, the sealant film according to any one of [1] to [6], a first base film containing a propylene-based polymer, and a second base film containing a propylene-based polymer, in which the first base film has an inorganic oxide layer on at least one surface thereof.
[10] A package formed from the packaging material according to [7].

### Advantageous Effects of Invention

According to the present invention, it is possible to provide a sealant film which, although being a polypropylene-based film, can achieve a well-balanced combination of excellent low-temperature sealability and excellent drop bag resistance during low-temperature storage at a high level. Further, according to the present invention, it is possible to provide a packaging material and a package obtained using the sealant film.

The sealant film of the present invention also has heat resistance capable of withstanding retort processing, such as sterilization and disinfection under retort conditions at 128°C, for example.

### Brief Description of Drawings

FIG. 1 is a cross-sectional view of a sealant film according to one embodiment of the present invention.
FIG. 2 is a cross-sectional view of a sealant film according to one embodiment of the present invention.
FIG. 3 is a cross-sectional view of a sealant film according to one embodiment of the present invention.
FIG. 4 is a cross-sectional view of a packaging material according to one embodiment of the present invention.
FIG. 5 is a cross-sectional view of a packaging material according to one embodiment of the present invention.
FIG. 6 is a cross-sectional view of a packaging material according to one embodiment of the present invention.

### Description of Embodiments

### <Sealant Film 100>

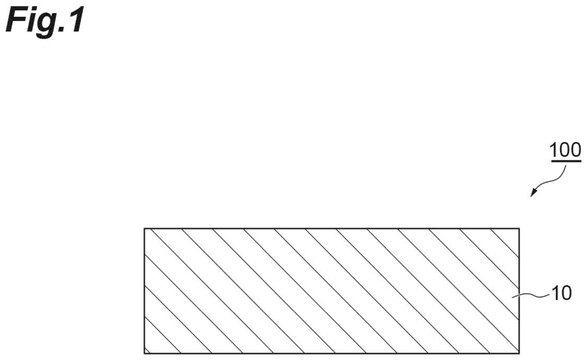

FIG. 1 is a cross-sectional view of a sealant film 100 according to one embodiment of the present invention. The sealant film 100 includes a first layer 10 that contains a propylene homopolymer (A), a propylene-ethylene random copolymer (B), and an ethylene-α-olefin copolymer elastomer (C).

### (Propylene Homopolymer (A))

The propylene homopolymer (A) can be obtained by a method of homopolymerizing propylene using, for example, a Ziegler-Natta type catalyst, a metallocene catalyst, or a half-metallocene catalyst.. By including the propylene homopolymer (A), the sealant film can impart excellent heat resistance to the first layer. As a result, for example, after pressurized heating under retort conditions at 128°C, fusion is less likely to occur on the inner surface of the packaging bag.

As the propylene homopolymer (A), a material having a melting onset temperature of 150°C or higher and a melting point of 155°C or higher, as measured by differential scanning calorimetry (JIS K 7121), can be used. By setting both the melting onset temperature and the melting point within this range, the first layer can be imparted with even better heat resistance. Therefore, for example, after performing a pressurized heating treatment under retort conditions at 128°C, it is more difficult for fusion to occur on the inner surface of the packaging bag. The conditions for the differential scanning calorimetry are as follows.

### [Differential Scanning Calorimetry Conditions]

When the temperature is increased from 25°C to 230°C at 10°C/min, the intersection point between the straight line obtained by extending the baseline on the low-temperature side of the DSC curve toward the high-temperature side and the tangent line drawn to the low-temperature side of the melting peak so as to be in contact with the curve and have the maximum slope is defined as the melting onset temperature, and the temperature at the apex of the melting peak is defined as the melting point.

As the propylene homopolymer (A), a material having a melt flow rate (MFR: ISO 1133) (temperature 230°C, load 2.16 kg) in the range of 2.0 to 7.0 g/10 min can be used. When the melt flow rate is equal to or greater than the lower limit, a load on an extruder during forming processing is reduced, a processing speed is unlikely to decrease, and excellent productivity is easily maintained. Also, when the melt flow rate is equal to or less than the upper limit, the first layer is likely to have excellent impact resistance.

### (Propylene-ethylene Random Copolymer (B))

The propylene-ethylene random copolymer (B) can be obtained by copolymerizing ethylene as a comonomer with a main monomer consisting of propylene using, for example, a Ziegler-Natta type catalyst, a metallocene catalyst, or a half-metallocene catalyst. Due to the propylene-ethylene random copolymer (B) being contained in the first layer, excellent low-temperature sealability can be easily achieved while maintaining heat resistance.

As the propylene-ethylene random copolymer (B), a material having a melting point in the range of 132°C to 150°C as measured by differential scanning calorimetry (JIS K 7121) can be used. By using the polymer having a melting point within this range, it becomes easier to achieve excellent low-temperature sealability while maintaining heat resistance. The conditions for the differential scanning calorimetry are as follows.
[Differential Scanning Calorimetry Conditions] The melting point is defined as the temperature at the apex of the melting peak on the DSC curve obtained by heating from 25°C to 230°C at a rate of 10°C/min.

An ethylene content of the propylene-ethylene random copolymer (B) may be 6 mass% or less. When the ethylene content is equal to or less than the upper limit, heat resistance is not excessively deteriorated while low-temperature sealability is maintained. As a result, for example, after pressurized heating under retort conditions at 128°C, fusion on the inner surface of the packaging bag can be more easily suppressed. From this viewpoint, the ethylene content may be 5.5 mass% or less, and may be 4.5 mass% or less. The lower limit of the ethylene content is not particularly restricted, but from the viewpoint of low-temperature sealability, it may be set to 3 mass%.

The ethylene content of the propylene-ethylene random copolymer (B) can be measured according to an ethylene content quantification method (IR method) described on pages 412 to 413 of the Polymer Analysis Handbook (May 10, 2013, 3rd printing) edited by the Polymer Analysis Council of the Japan Society for Analytical Chemistry.

### (Ethylene-α-olefin Copolymer Elastomer (C))

The ethylene-α-olefin copolymer elastomer (C) can be obtained by copolymerizing ethylene and an α-olefin using, for example, a Ziegler-Natta type catalyst, a metallocene catalyst, or a half-metallocene catalyst. By including the ethylene-α-olefin copolymer elastomer (C) in the first layer, excellent low-temperature sealability can be achieved. Further, by including the ethylene-α-olefin copolymer elastomer (C) in the first layer, it becomes easier to achieve excellent drop bag resistance during low-temperature storage and pinhole resistance.

As the ethylene-α-olefin copolymer elastomer (C), an ethylene-α-olefin copolymer elastomer having structural units derived from ethylene and structural units derived from an α-olefin having 4 to 20 carbon atoms can be used. As a result, excellent low-temperature sealability can be easily achieved. The ethylene-α-olefin copolymer elastomer (C) may be a random copolymer.

Examples of the α-olefin having 4 to 20 carbon atoms include 1-butene, 1-pentene, 1-hexene, 1-heptene, 1-octene, 1-nonene, 1-decene, 1-hexadecene, 1-eicosene, 4-methyl-1-pentene, and 4-methyl-1-hexene. The α-olefin having 4 to 20 carbon atoms is preferably 1-butene or 1-hexene. The ethylene-α-olefin copolymer elastomer (C) may have two or more structural units derived from the α-olefins having 4 to 20 carbon atoms.

As the ethylene-α-olefin copolymer elastomer (C), a material in which the content of structural units derived from ethylene is 75 to 97 mass%, preferably 80 to 95 mass%, based on 100 mass% of the total amount of the ethylene-α-olefin copolymer elastomer (C) (total amount of structural units), can be used. When the content of structural units derived from ethylene is equal to or greater than the lower limit, excellent heat resistance can be maintained more easily. In addition, when the content of structural units derived from ethylene is equal to or less than the upper limit, excellent low-temperature sealability can be more easily achieved.

As the ethylene-α-olefin copolymer elastomer (C), a material having a density (JIS K 7112) in the range of 860 to 950 kg/m³ can be used. When the density is equal to or greater than the lower limit, the tackiness of the film can be suppressed. In addition, when the density is equal to or less than the upper limit, low-temperature sealability can be easily achieved.

As the ethylene-α-olefin copolymer elastomer (C), a material having a melt flow rate (MFR: ISO 1133) (measured at a temperature of 190°C under a load of 2.16 kg) in the range of 0.5 to 15 g/10 min, preferably 0.5 to 10 g/10 min or 0.5 to 5 g/10 min, can be used. When the melt flow rate is equal to or greater than the lower limit, a load on an extruder during forming processing is reduced, a processing speed is unlikely to decrease, and excellent productivity is easily maintained. In addition, when the melt flow rate is equal to or less than the upper limit, compatibility with the propylene homopolymer (A) and the propylene-ethylene random copolymer (B) is improved, making it easier to maintain heat resistance.

The first layer contains 17.5 parts by mass or more of the ethylene-α-olefin copolymer elastomer (C) based on a total of 100 parts by mass of the propylene homopolymer (A) and the propylene-ethylene random copolymer (B). When the content of the ethylene-α-olefin copolymer elastomer (C) is equal to or greater than the lower limit, it is possible to achieve both excellent low-temperature sealability and excellent drop bag resistance during low-temperature storage compared to a case where the content is less than the lower limit. The upper limit of the content of the ethylene-α-olefin copolymer elastomer (C) may be appropriately set; however, from the viewpoint of heat resistance, it may be set to 43 parts by mass or less. From the above viewpoint, the lower limit of the content may be 20 parts by mass, 22 parts by mass, or 24 parts by mass, and the upper limit may be 40 parts by mass, 33 parts by mass, or 26 parts by mass.

In the first layer, the mass ratio (A)/(B) of the content of the propylene homopolymer (A) to the content of the propylene-ethylene random copolymer (B) may be in the range of 0.05 to 0.30. When the above mass ratio (A)/(B) is equal to or greater than the lower limit, excellent heat resistance can be more easily maintained. In addition, when the above mass ratio (A)/(B) is equal to or less than the upper limit, excellent low-temperature sealability can be more easily achieved. From this viewpoint, the mass ratio (A)/(B) may be in the range of 0.07 to 0.25, and may be in the range of 0.10 to 0.20.

From the viewpoint of achieving both excellent low-temperature sealability and excellent drop bag resistance during low-temperature storage, the content of the propylene homopolymer (A), the propylene-ethylene random copolymer (B), and the ethylene-α-olefin copolymer elastomer (C) in the first layer may be 95 mass% or more, and may be 100 mass% (substantially consisting of these components), based on the total mass of the first layer.

### <Sealant Film 101>

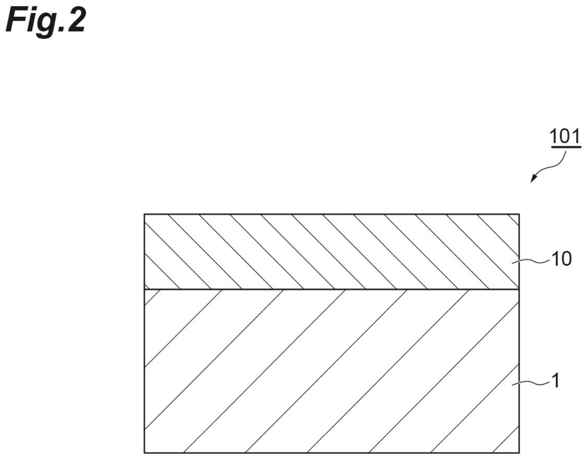

FIG. 2 is a cross-sectional view of a sealant film 101 according to one embodiment of the present invention. The sealant film 101 includes the first layer 10, which serves as a heat seal layer, and a second layer 1, which contains a propylene-ethylene block copolymer (D) and an ethylene-propylene copolymer elastomer (E). By providing the second layer, the sealant film can more easily achieve excellent cold impact resistance. In the present aspect, the second layer does not have concealing properties (is a non-concealing layer), in comparison to a case where titanium oxide, which will be described later, is included (concealing layer).

### (Propylene-ethylene Block Copolymer (D))

The propylene-ethylene block copolymer (D) is a copolymer that can be obtained by producing a propylene polymer (D1) in a first process, and then producing an ethylene-propylene copolymer (D2) by gas-phase polymerization in a second process. The propylene-ethylene block copolymer (D) is not a block copolymer in which a propylene polymer terminal and an ethylene-propylene copolymer terminal are bonded, but is a kind of blend-based copolymer. When the propylene-ethylene block copolymer (D) is contained in the second layer, excellent cold impact resistance can be more easily achieved.

As the propylene-ethylene block copolymer (D), a material having a melt flow rate (MFR: ISO 1133) in the range of 0.5 to 2.5 g/10 min (measured at a temperature of 230°C under a load of 2.16 kg) can be used. When the melt flow rate is equal to or greater than the lower limit, a load on an extruder during forming processing is reduced, a processing speed is unlikely to decrease, and excellent productivity is easily maintained. When the melt flow rate is equal to or less than the upper limit, the second layer is likely to have excellent cold impact resistance.

The propylene-ethylene block copolymer (D) may contain 90 to 60 mass% of the propylene polymer (D1) and 10 to 40 mass% of the ethylene-propylene copolymer (D2). When each of the components falls within this range, excellent cold impact resistance can be easily achieved. From this viewpoint, the propylene-ethylene block copolymer (D) may contain 87.5 to 65 mass% of the propylene polymer (D1) and 12.5 to 35 mass% of the ethylene-propylene copolymer (D2), and may contain 85 to 70 mass% of the propylene polymer (D1) and 15 to 30 mass% of the ethylene-propylene copolymer (D2).

The ethylene content of the ethylene-propylene copolymer (D2) is not particularly limited, but it may be in the range of 20 to 40 mass%. When the ethylene content is equal to or less than the upper limit, tackiness of a product material can be suppressed, contamination due to tackiness of the product material does not easily occur at the time of manufacture, and excellent productivity is easily maintained. Also, when the ethylene content is equal to or greater than the lower limit, excellent cold impact resistance can be more easily achieved.

### (Ethylene-propylene Copolymer Elastomer (E))

The ethylene-propylene copolymer elastomer (E) can be obtained by, for example, a slurry polymerization method performed in the presence of an inert hydrocarbon such as hexane, heptane, kerosene, or a liquefied α-olefin solvent such as propylene, a gas-phase polymerization method in the absence of a solvent, or the like. Specifically, the ethylene-propylene copolymer elastomer (E) can be obtained by using a known multistage polymerization method. That is, it is a polymerized high rubber-containing polypropylene-based resin that can be obtained by polymerizing propylene and/or propylene-α-olefin polymer in a first stage reactor and then copolymerizing propylene and α-olefin in a second stage reaction. When the second layer contains the ethylene-propylene copolymer elastomer (E), even better cold impact resistance can be more easily achieved.

As the ethylene-propylene copolymer elastomer (E), a material having a melt flow rate (MFR: ISO 1133) in the range of 0.5 to 3.5 g/10 min (measured at a temperature of 230°C under a load of 2.16 kg) can be used. When the melt flow rate is equal to or greater than the lower limit, a load on an extruder during forming processing is reduced, a processing speed is unlikely to decrease, and excellent productivity is easily maintained. When the melt flow rate is equal to or less than the upper limit, excellent compatibility between the propylene-ethylene block copolymer (D) and the ethylene-propylene copolymer elastomer (E) is achieved, making it easier to achieve cold impact resistance.

As the ethylene-propylene copolymer elastomer (E), one having a mass ratio of propylene content to ethylene content (propylene content/ethylene content) in the range of 1.5 to 4 can be used. When the ratio is in the above range, even better cold impact resistance can be more easily achieved.

The second layer may contain 90 to 50 mass% of the propylene-ethylene block copolymer (D) and 10 to 50 mass% of the ethylene-propylene copolymer elastomer (E). When the content of the propylene-ethylene block copolymer (D) is 50 mass% or more, excellent heat resistance can be more easily maintained. From this viewpoint, the content may be 60 mass% or more, and may be 70 mass% or more. When the content of the propylene-ethylene block copolymer (D) is 90 mass% or less, that is, when a content of the ethylene-propylene copolymer elastomer (E) is at least 10 mass% or more, the excellent cold impact resistance can be exhibited. From this viewpoint, the content of the propylene-ethylene block copolymer (D) may be 87.5 mass% or less, and may be 85 mass% or less. From the above viewpoint, the content of the ethylene-propylene copolymer elastomer (E) may be 12.5 to 40 mass%, and may be 15 to 30 mass%.

From the viewpoint of improved heat resistance and cold impact resistance, the mass ratio (E)/(D) of the content of the ethylene-propylene copolymer elastomer (E) to the content of the propylene-ethylene block copolymer (D) in the second layer is preferably 0.10 to 1.00. From the viewpoint of further improved cold impact resistance, the mass ratio (E)/(D) may be 0.20 or more, 0.30 or more, or 0.40 or more. From the viewpoint of further improved heat resistance, the mass ratio (E)/(D) may be 0.80 or less, 0.60 or less, or 0.50 or less.

In the sealant film 101 illustrated in FIG. 2, the second layer 1 may be a layer containing a propylene-based polymer and titanium oxide (F). By including the titanium oxide (F) in the second layer, it is possible to impart concealing properties to the sealant film. Such a second layer can be referred to as a concealing layer.

### (Titanium Oxide (F))

Titanium oxide (F) is, for example, in particulate form and is dispersed in the second layer. The average particle diameter of the titanium oxide may be 0.10 to 0.50 µm, and may also be 0.15 to 0.40 µm or 0.20 to 0.30 µm. The average particle diameter of the titanium oxide is a value measured by a laser diffraction/scattering method.

The content of the titanium oxide (F) in the concealing layer is preferably 0.10 to 30 mass%. From the viewpoint of improved concealing properties, the content of the titanium oxide (F) in the concealing layer may be 1 mass% or more, 5 mass% or more, or 7 mass% or more, based on the total mass of the concealing layer. From the viewpoint of improved recyclability and cold impact resistance, the content of the titanium oxide (F) in the concealing layer may be 23 mass% or less, 20 mass% or less, 15 mass% or less, 12 mass% or less, or 8 mass% or less, based on the total mass of the concealing layer.

From the viewpoint of concealing properties, recyclability, and cold impact resistance, the content of the propylene-based resin in the concealing layer is preferably 70 to 99.9 mass% or more, based on the total mass of the concealing layer. The content of the propylene-based resin in the concealing layer can be measured in accordance with Raman spectroscopy.

Examples of the propylene-based polymer used in the concealing layer include the above-described propylene homopolymer (A), the propylene-ethylene random copolymer (B), the propylene-ethylene block copolymer (D), and the ethylene-propylene copolymer elastomer (E), and these may be used in combination depending on the properties of the concealing layer.

In addition, the concealing layer may also contain an ethylene-α-olefin copolymer elastomer (C).

For example, from the viewpoint of excellent cold impact resistance, it is preferable that the propylene-based polymer in the concealing layer include a propylene-ethylene block copolymer (D), and more preferably includes both a propylene-ethylene block copolymer (D) and an ethylene-propylene copolymer elastomer (E).

The content of the propylene-ethylene block copolymer resin (D) in the concealing layer may be 35 mass% or more, 50 mass% or more, or 60 mass% or more based on the total mass of the propylene-based polymer, from the viewpoint of improved heat resistance. From the viewpoint of improved cold impact resistance, the content of the propylene-ethylene block copolymer (D) in the concealing layer may be 90 mass% or less, 80 mass% or less, or 70 mass% or less, based on the total mass of the propylene-based polymer.

From the viewpoint of improved cold impact resistance, the content of the ethylene-propylene copolymer elastomer (E) in the concealing layer may be 10 mass% or more, 15 mass% or more, or 20 mass% or more, based on the total mass of the propylene-based polymer. From the viewpoint of improved heat resistance, the content of the ethylene-propylene copolymer elastomer (E) in the concealing layer may be 50 mass% or less, 40 mass% or less, or 30 mass% or less, based on the total mass of the propylene-based polymer.

From the viewpoint of improved heat resistance and cold impact resistance, the mass ratio (E)/(D) of the content of the ethylene-propylene copolymer elastomer (E) to the content of the propylene-ethylene block copolymer resin (D) in the concealing layer is preferably from 0.10 to 1.00. From the viewpoint of further improved cold impact resistance, the mass ratio (E)/(D) may be 0.20 or more, 0.30 or more, or 0.40 or more. From the viewpoint of further improved heat resistance, the mass ratio (E)/(D) may be 0.80 or less, 0.60 or less, or 0.50 or less.

### <Sealant Film 102>

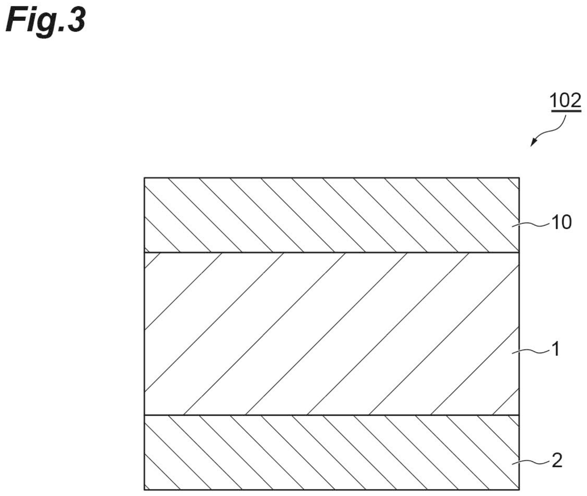

FIG. 3 is a cross-sectional view of a sealant film 102 according to one embodiment of the present invention. The sealant film 102 includes, in this order, the first layer 10 serving as a heat seal layer, the second layer 1, and a third layer 2 containing a propylene homopolymer (A) and a propylene-ethylene random copolymer (B). By providing the third layer, it becomes easier to suppress distortion and curling of the film.

There is no particular limitation on the mixing ratio (mass ratio) of the propylene homopolymer (A) and the propylene-ethylene random copolymer (B) in the third layer; however, from the viewpoint of suppressing film curling after film formation, it is preferable that the ratio be the same as that of the first layer. From the same viewpoint, the third layer may contain the propylene homopolymer (A), the propylene-ethylene random copolymer (B), and the ethylene-α-olefin copolymer elastomer (C), and may have the same composition as the first layer.

The sealant film is an unoriented film and can be primarily composed of polypropylene-based materials, and thus can be referred to as a polypropylene-based unoriented film.

The thickness of the sealant film is not particularly limited as long as it falls within a range suitable for use as a packaging material film, for example. However, in a case where the film is too thick, it may lead to cost disadvantages; therefore, the thickness of the film can be 100 µm or less, and may be within the range of 50 to 70 µm. The thickness of the sealant film may be the thickness of the first layer 10 in the sealant film 100.

The thickness ratio of the first layer in the sealant films 101 and 102 may be 8 to 30% based on the thickness of the sealant film. When the thickness ratio of the first layer is equal to or greater than the lower limit, excellent heat seal strength tends to be exhibited, and when it is equal to or less than the upper limit, cold impact resistance of the film tends to be achieved more easily, and practical applicability tends to be achieved more easily. From this viewpoint, the thickness ratio of the first layer may be 10 to 25%.

The thickness of the second layer in the sealant films 101 and 102 may be 20 µm or more. As a result, the cold impact resistance of the film is maintained, making it less likely to rupture even during low-temperature storage. From this viewpoint, the thickness of the second layer may be 25 µm or more, and may be 30 µm or more. An upper limit of the thickness of the second layer is not particularly limited, but due to a cost disadvantage, it can be set to 50 µm or 40 µm.

The total thickness ratio of the first layer and the third layer in the sealant film 102 may be 16 to 42% based on the thickness of the sealant film. When the total thickness ratio of the first layer and the third layer is equal to or greater than the lower limit, excellent heat seal strength can be easily achieved, and when it is equal to or less than the upper limit, cold impact resistance of the film is easily achieved, and practicality is easily achieved. From this viewpoint, the total thickness ratio of the first layer and the third layer may be 20 to 35%.

### <Manufacturing Method of Sealant Film>

A method for manufacturing a sealant film is not particularly limited, and a known method can be utilized.

For example, examples of a method of thermoforming processing of the first to third layers include a melt-kneading method using a general kneader such as a single-screw extruder, a twin-screw extruder, or a multi-screw extruder, and a method in which each component is dissolved or dispersed and mixed, followed by heating to remove the solvent. When operability is taken into consideration, a single-screw screw extruder or a twin-screw screw extruder can be used. When a single-screw extruder is used, a full flight screw, a screw having a mixing element, a barrier flight screw, a fluted screw, and the like can be exemplified as the screw, and these can be used without particular limitation. As a biaxial kneading device, a twin-screw extruder rotating in the same direction, a twin-screw extruder rotating in opposite directions, or the like can be used, and as a shape of the screw, a full-flight screw, a kneading disc type, or the like can be used without any particular limitation.

In the above methods, after melting the raw materials for each layer, the formation and lamination of each layer can be carried out by forming a film using a T-die via a feed block or a multi-manifold.

The obtained sealant film may be subjected, as necessary, to an appropriate surface modification treatment to improve its suitability for a subsequent process. For example, in order to improve printing suitability when using a single film and to enhance lamination suitability when using a laminated film, surface modification treatment may be applied to the printing surface or to the surface that contacts the base film. Examples of the surface modification treatment may include a treatment that generates a functional group by oxidizing a film surface, such as a corona discharge treatment, a plasma treatment, a flame treatment, or the like, and a modification treatment using a wet process that forms an easy-adhesive layer by coating.

### <Packaging Material>

A packaging material includes the above-mentioned sealant film. The packaging material may include only the above-mentioned sealant film, or may further include other layers such as a base film. The sealant film is provided in the packaging material such that the first layer, which serves as the heat seal layer, faces the contents side.

### <Packaging Materials 200 to 202>

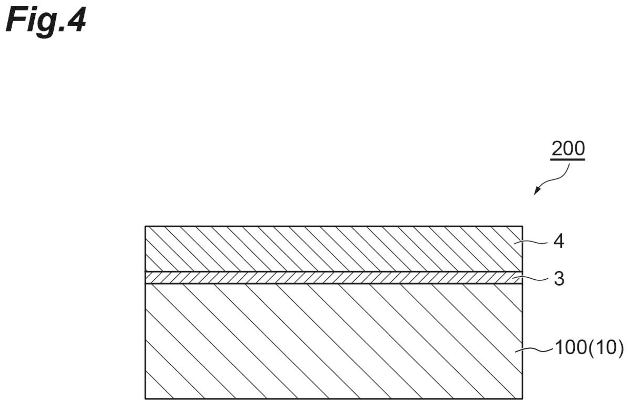

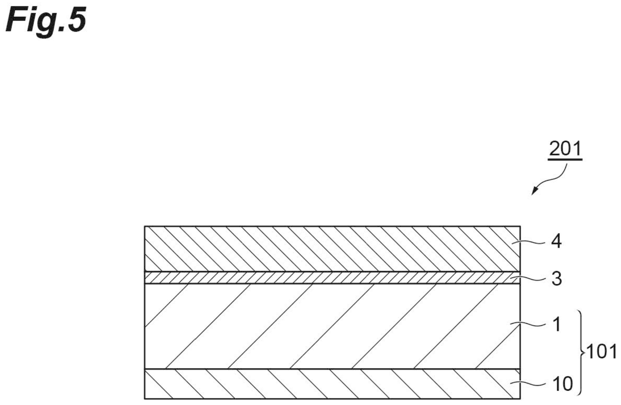

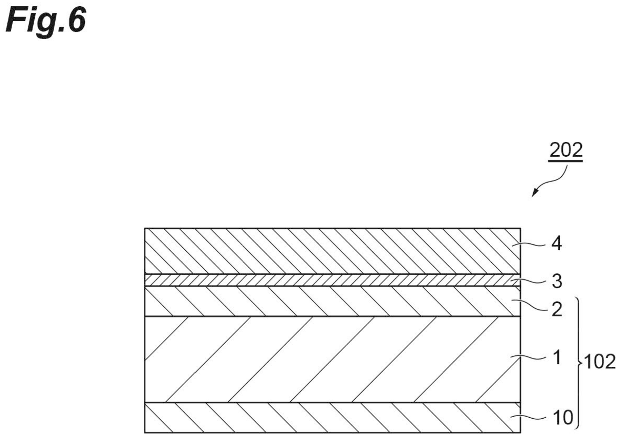

FIGS. 4 to 6 are cross-sectional views of a packaging material according to one embodiment of the present invention.

A packaging material 200 is formed by laminating the sealant film 100 and a base film 4 with an adhesive layer 3 interposed therebetween.

The packaging material 201 is formed by laminating the sealant film 101 and the base film 4 with the adhesive layer 3 interposed therebetween.

The packaging material 202 is formed by laminating the sealant film 102 and the base film 4 with the adhesive layer 3 interposed therebetween.

### (Base Film)

The base film contains a propylene-based polymer and may be made of a propylene-based polymer. Examples of the propylene-based polymers include homopolypropylene and propylene copolymers. Examples of the propylene copolymers include propylene-ethylene random copolymers, propylene-ethylene block copolymers, and propylene-α-olefin copolymers.

The content of the propylene-based polymer in the base film may be 99.5 mass% or more based on the total mass of the base film. The base film may contain additives such as antistatic agents, ultraviolet absorbers, plasticizers, and lubricants in small amounts. The base film may be subjected to surface treatments such as plasma treatment to improve adhesion with the layers to be laminated. In addition, the base film may have an inorganic oxide layer (for example, a metal oxide deposition layer) on at least one surface.

The base film may be either an oriented film or a unoriented film, but from the viewpoint of gas barrier properties, an oriented film is preferable. Here, examples of the oriented films include uniaxially oriented films and biaxially oriented films; however, the biaxially oriented films are preferable because they improve the heat resistance of the packaging material.

The thickness of the base film is not particularly limited, but may be, for example, 0.1 mm or less. Among these, the thickness of the base film is preferably 40 µm or less, more preferably 35 µm or less, and particularly preferably 30 µm or less. When the thickness of the base film is 0.1 mm or less, the flexibility of the packaging material is further improved, thereby enhancing durability. In addition, from the viewpoint of improving strength, the thickness of the base film is preferably 10 µm or more, and more preferably 12 µm or more.

### (Adhesive Layer)

Examples of materials for the adhesive layer include polyester-isocyanate resins, urethane resins, polyether resins, and acid-modified polyolefins.

The packaging material can be manufactured by a conventional dry lamination method in which the sealant film and the base film are laminated via an adhesive layer. However, the packaging material may also be manufactured by a method in which the sealant film is directly extruded onto a substrate and laminated.

The composition of the packaging material can be appropriately adjusted according to required characteristics of the package such as, for example, barrier properties that satisfy a shelf life of the packaged food, size and impact resistance that can accommodate the weight of the contents, visibility of the contents, recyclability, or the like. Such other packaging materials are described below.

### <Other Packaging Materials>

The packaging material may include, in this order, the sealant film, a first base film containing a propylene-based polymer, and a second base film containing a propylene-based polymer. The first base film (that is, the base film on the sealant film side) may have an inorganic oxide layer on at least one surface.

### (First Base Film and Second Base Film)

As the first base film and the second base film, the films described above as the base film can be used.

### (Adhesion Layer)

An adhesion layer (anchor coat layer) may be provided on the surface of the first base film on which the inorganic oxide layer is to be laminated. The adhesion layer is provided on the first base film to achieve the two effects of improving the adhesion performance between the first base film and the inorganic oxide layer and improving the smoothness of the first base film surface. Since the smoothness is improved, the inorganic oxide layer can be subjected to uniform film formation with no defect, and thus high barrier properties are likely to be manifested. The adhesion layer can be formed using an anchor coating agent.

Examples of the anchor coating agent include polyester-based polyurethane resins and polyether-based polyurethane resins. From the viewpoint of heat resistance and interlayer adhesive strength, as the anchor coating agent, polyester-based polyurethane resin is preferred.

The thickness of the adhesion layer is not particularly limited, but is preferably in the range of 0.01 to 5 µm, more preferably in the range of 0.03 to 3 µm, and particularly preferably in the range of 0.05 to 2 µm. When the thickness of the adhesion layer is equal to or greater than the lower limit, there is a tendency that a more sufficient interlayer adhesive strength can be achieved. On the other hand, when it is equal to or less than the upper limit, there is a tendency that desired gas barrier properties are likely to be manifested.

Regarding a method for coating the first base film with the adhesion layer thereon, a known coating method can be used without any particular limitation, and examples thereof include an immersion method (dipping method); and a method of using a spray, a coater, a printer, a brush, or the like. In addition, examples of kinds of coaters and printers used in these methods and coating types thereof can include a gravure coater of a direct gravure type, a reverse gravure type, a kiss reverse gravure type, an offset gravure type, or the like; a reverse roll coater; a micro-gravure coater; a chamber doctor-combined coater; an air-knife coater; a dip coater; a bar coater; a comma coater; a die coater; and the like.

The coating amount of the adhesion layer is preferably 0.01 to 5 g/m², and more preferably 0.03 to 3 g/m², based on the mass per 1 m² after applying and drying the anchor coating agent. When mass per 1 m² thereof after coating with an anchor coating agent and drying is equal to or greater than the lower limit, there is a tendency that film formation becomes sufficient. On the other hand, when it is equal to or less than the upper limit, there is a tendency that the anchor coating agent is likely to be sufficiently dried and a solvent is unlikely to remain.

A method for drying the adhesion layer is not particularly limited, and examples thereof include a method of natural drying, a method for performing drying in an oven set to a predetermined temperature, and methods using dryers attached to the above-mentioned coaters, for example, an arch dryer, a floating dryer, a drum dryer, and an infrared dryer, and the like. Moreover, drying conditions can be suitably selected depending on the drying method. For example, in the method for performing drying in an oven, it is preferable to perform drying at a temperature of 60°C to 100°C for approximately one second to two minutes.

Instead of the above polyurethane resin, a polyvinyl alcohol-based resin may be used as the adhesion layer. A polyvinyl alcohol-based resin need only have a vinyl alcohol unit established through saponification of a vinyl ester unit, and examples thereof include a polyvinyl alcohol (PVA), an ethylene-vinyl alcohol copolymer (EVOH).

Examples of a PVA include resins in which a vinyl ester such as a vinyl acetate, a vinyl formate, a vinyl propionate, a vinyl valerate, a vinyl caprate, a vinyl laurate, a vinyl stearate, a vinyl pivalate, or a vinyl versatate is polymerized alone and is subsequently saponified. A PVA may be a modified PVA subjected to copolymerization modification or post-modification. For example, a denatured PVA can be obtained by copolymerizing a vinyl ester and an unsaturated monomer which can be copolymerized with a vinyl ester and saponifying them thereafter. Examples of an unsaturated monomer which can be copolymerized with a vinyl ester include olefins such as ethylene, propylene, isobutylene, α-octene, α-dodecene, and α-octadecene; hydroxy group-containing α-olefins such as 3-butene-1-ol, 4-pentyne-1-ol, and 5-hexen-1-ol; unsaturated acids such as acrylic acid, methacrylic acid, crotonic acid, maleic acid, maleic anhydride, itaconic acid, and undecylenic acid; nitriles such as acrylonitrile and methacrylonitrile; amides such as diacetone acrylamide, acrylamide, and methacrylamide; olefin sulfonic acids such as ethylene sulfonic acid, allyl sulfonic acid, and methallyl sulfonic acid; vinyl compounds such as alkyl vinyl ether, dimethylallyl vinyl ketone, N-vinylpyrrolidone, vinyl chloride, vinyl ethylene carbonate, 2,2-dialkyl-4-vinyl-1,3-dioxolane, glycerin monoallyl ether, and 3,4-diacetoxy-1-butene; vinylidene chloride; 1,4-diacetoxy-2-butene; and vinylene carbonate.

A degree of polymerization of a PVA is preferably 300 to 3,000. When the degree of polymerization is less than 300, the barrier properties tend to deteriorate; whereas when it exceeds 3,000, the viscosity becomes too high, making coating suitability tend to decrease. A degree of saponification of a PVA is preferably 90 mol% or higher, more preferably 95 mol% or higher, and further preferably 99 mol% or higher. In addition, the degree of saponification of the PVA may be 100 mol% or lower, or 99.9 mol% or lower. The degree of polymerization and the degree of saponification of the PVA can be measured in conformity with the method described in JIS K 6726 (1994).

An EVOH can be generally obtained by saponifying a copolymer of ethylene and an acid vinyl ester such as vinyl acetate, vinyl formate, vinyl propionate, vinyl valerate, vinyl caprate, vinyl laurate, vinyl stearate, vinyl pivalate, or vinyl versatate.

A degree of polymerization of an EVOH is preferably 300 to 3,000. When the degree of polymerization is less than 300, barrier properties tend to deteriorate, whereas when it exceeds 3,000, the viscosity becomes too high, making coating suitability tend to decrease. A degree of saponification of vinyl ester components of an EVOH is preferably 90 mol% or higher, more preferably 95 mol% or higher, and further preferably 99 mol% or higher. In addition, the degree of saponification of the EVOH may be 100 mol% or lower or 99.9 mol% or lower. The degree of saponification of the EVOH can be obtained from a peak surface area of hydrogen atoms included in a vinyl ester structure and a peak surface area of hydrogen atoms included in a vinyl alcohol structure by performing nuclear magnetic resonance (1H-NMR) measurement.

An ethylene unit content of an EVOH is 10 mol% or higher, more preferably 15 mol% or higher, further preferably 20 mol% or higher, and particularly preferably 25 mol% or higher. In addition, the ethylene unit content of an EVOH is preferably 65 mol% or lower, more preferably 55 mol% or lower, and further preferably 50 mol% or lower. When the ethylene unit content is 10 mol% or higher, the gas barrier properties or the dimensional stability under high humidity can be favorably retained. On the other hand, when the ethylene unit content is 65 mol% or lower, the gas barrier properties can be enhanced. The ethylene unit content of an EVOH can be obtained by an NMR method.

When a polyvinyl alcohol-based resin is used as the adhesion layer, examples of a method for forming the adhesion layer include coating using a polyvinyl alcohol-based resin solution and multilayer extrusion.

### (Inorganic Oxide Layer)

Examples of inorganic oxides included in the inorganic oxide layer include aluminum oxide, silicon oxide, magnesium oxide, and tin oxide. From a viewpoint of transparency and barrier properties, an inorganic oxide may be selected from the group consisting of an aluminum oxide, a silicon oxide, and a magnesium oxide. Furthermore, from a viewpoint of excellent tensile drawability at the time of processing, it is preferable that the inorganic oxide layer be a layer using silicon oxide. When the inorganic oxide layer is used, high barrier properties can be achieved with an extremely thin layer within a range not affecting the recycling efficiency of the laminate.

An O/Si ratio of the inorganic oxide layer is preferably 1.7 or higher. When the O/Si ratio is 1.7 or higher, the content of metallic Si is suppressed, making it easier to achieve good transparency. In addition, the O/Si ratio is preferably 2.0 or less. When the O/Si ratio is 2.0 or less, the crystallinity of SiO increases, preventing the inorganic oxide layer from becoming excessively hard and thereby achieving good tensile resistance. This can prevent cracks from occurring in the inorganic oxide layer when the gas barrier coating layer is laminated. In addition, even after molding into a packaging bag, the first base film may shrink due to heat during boiling or retort treatment; however, when the O/Si ratio is 2.0 or less, the inorganic oxide layer can more easily follow such shrinkage, thereby suppressing a decrease in barrier properties. From the viewpoint of achieving these effects more sufficiently, the O/Si ratio of the inorganic oxide layer is preferably 1.75 or more and 1.9 or less, and more preferably 1.8 or more and 1.85 or less.

The O/Si ratio of the inorganic oxide layer can be obtained by X-ray photoelectron spectroscopy (XPS). For example, the measurement device can be an X-ray photoelectron spectrometer (manufactured by JEOL Ltd., product name: JPS-90MXV), using a non-monochromatized Mg Kα (1253.6 eV) X-ray source with an X-ray output of 100 W (10 kV-10 mA) for measurement. For quantitative analysis to determine the O/Si ratio, relative sensitivity factors of 2.28 for O 1s and 0.9 for Si 2p can be used.

A film thickness of the inorganic oxide layer is preferably 10 nm to 50 nm. When the film thickness is 10 nm or more, sufficient water vapor barrier properties can be achieved. In addition, when the film thickness is 50 nm or less, occurrence of cracks caused by deformation due to internal stress of a thin film can be suppressed, and degradation in water vapor barrier properties can be curbed. When the film thickness exceeds 50 nm, the cost is likely to increase due to an increase in material usage and a longer film formation time, and is therefore not preferred from an economic standpoint. From a viewpoint similar to that described above, the film thickness of an inorganic oxide layer is more preferably 20 nm or more and 40 nm or less.

For example, the inorganic oxide layer can be formed through vacuum deposition. Regarding vacuum film formation, a physical vapor deposition method or a chemical vapor deposition method can be used. Examples of a physical vapor deposition method include a vacuum vapor deposition method, a sputtering method, and an ion plating method, but are not limited thereto. Examples of a chemical vapor deposition method include a thermal CVD method, a plasma CVD method, and a photo-CVD method, but are not limited thereto.

In the above-mentioned vacuum film formation, a resistance heating-type vacuum vapor deposition method, an electron beam (EB) heating-type vacuum vapor deposition method, an induction heating-type vacuum vapor deposition method, a sputtering method, a reactive sputtering method, a dual magnetron sputtering method, a plasma chemical vapor deposition method (PECVD method), and the like is particularly preferably used. However, in consideration of productivity, a vacuum vapor deposition method is the most superior method at present. For the heating means of the vacuum vapor deposition method, it is preferable to use any of an electron beam heating method, a resistance heating method, or an induction heating method.

### (Gas Barrier Coating Layer)

The first base film may further have a gas barrier coating layer on the inorganic oxide layer. The gas barrier coating layer is a layer formed using a gas barrier coating layer forming composition containing at least one selected from the group consisting of hydroxyl group-containing polymer compounds, metal alkoxides, silane coupling agents, and their hydrolysates.

The gas barrier coating layer is a film layer having gas barrier properties, formed using a gas barrier coating layer forming composition (hereinafter also referred to as a coating agent) mainly composed of an aqueous solution or an aqueous/alcohol mixed solution containing at least one selected from the group consisting of hydroxyl group-containing polymer compounds, metal alkoxides, silane coupling agents, and the hydrolysates thereof. From the viewpoint of more sufficiently maintaining gas barrier properties after hydrothermal treatments such as retort processing, it is preferable that the coating agent contain at least a silane coupling agent or a hydrolysate thereof, it is more preferable that the coating agent contain at least one selected from the group consisting of hydroxyl group-containing polymer compounds, metal alkoxides, and their hydrolysates, and also contains a silane coupling agent or a hydrolysate thereof, and it is further preferable that the coating agent contain a hydroxyl group-containing polymer compound or its hydrolysate, a metal alkoxide or its hydrolysate, and a silane coupling agent or a hydrolysate thereof. For example, the coating agent can be prepared by mixing a solution in which a hydroxyl group-containing polymer compound which is a water-soluble polymer is dissolved in an aqueous (water or water/alcohol mixed) solvent, with a metal alkoxide and a silane coupling agent, either directly or after pre-treatment such as hydrolysis.

Each component contained in the coating agent for forming the gas barrier coating layer will be described in detail. Examples of hydroxyl group-containing polymer compounds used in the coating agent include polyvinyl alcohol, polyvinylpyrrolidone, starch, methyl cellulose, carboxymethyl cellulose, and sodium alginate. Among these, when polyvinyl alcohol (PVA) is used in the coating agent for the gas barrier coating layer, it is particularly preferable because of its superior gas barrier properties.

From the viewpoint of achieving excellent gas barrier properties, the gas barrier coating layer is preferably formed from a composition containing at least one selected from the group consisting of metal alkoxides represented by General Formula (I) below and their hydrolysates.

M(OR¹)ₘ(R²)ₙ₋ₘ ... (I)

In General Formula (I) above, R¹ and R² are each independently monovalent organic groups having 1 to 8 carbon atoms, preferably alkyl groups such as methyl or ethyl groups. M represents an n-valent metal atom such as Si, Ti, Al, or Zr. m is an integer from 1 to n. In a case where there are a plurality of R¹ or R², the R¹s or R²s may be the same or different.

Specific examples of metal alkoxides include tetraethoxysilane [Si(OC₂H₃)₄] and triisopropoxyaluminum [Al(O-2'-C₃H₇)₃]. Tetraethoxysilane and triisopropoxyaluminum are preferable because they are relatively stable in aqueous solvents after hydrolysis.

Examples of silane coupling agents include compounds represented by General Formula (II) below.

Si(OR¹¹)ₚ(R¹²)₃₋ₚR¹³ ... (II)

In General Formula (II) above, R¹¹ represents an alkyl group such as a methyl or ethyl group; R¹² represents a monovalent organic group such as an alkyl group, aralkyl group, aryl group, alkenyl group, an alkyl group substituted with an acryloxy group, or an alkyl group substituted with a methacryloxy group; and R¹³ represents a monovalent organic functional group; and p represents an integer from 1 to 3. In a case where there are a plurality of R¹¹ or R¹², the R¹¹s or R¹²s may be the same or different. Examples of the monovalent organic functional group represented by R¹³ include a glycidyloxy group, an epoxy group, a mercapto group, a hydroxyl group, an amino group, an alkyl group substituted with a halogen atom, and a monovalent organic functional group containing an isocyanate group.

Specific examples of silane coupling agents include vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, and γ-methacryloxypropylmethyldimethoxysilane.

The silane coupling agent may also be a oligomer of a compound represented by General Formula (II) above. As an oligomer, a trimer is preferable, and more preferably, 1,3,5-tris(3-trialkoxysilylalkyl)isocyanurate. This is a condensate of 3-isocyanate alkyl alkoxysilane. This 1,3,5-tris(3-trialkoxysilylalkyl)isocyanurate is known to have no chemical reactivity at the isocyanate moiety, while maintaining reactivity due to the polarity of the nurate moiety. Generally, it is added to adhesives similarly to 3-isocyanatoalkylalkoxysilane and is known as an adhesion promoter. Therefore, by adding 1,3,5-tris(3-trialkoxysilylalkyl)isocyanurate to a hydroxyl group-containing polymer compound, the water resistance of the gas barrier coating layer can be improved through hydrogen bonding. While 3-isocyanate alkyl alkoxysilanes are highly reactive and have low solution stability, 1,3,5-tris(3-trialkoxysilylalkyl)isocyanurate, although the nurate moiety is not water-soluble due to its polarity, disperses easily in aqueous solutions and can maintain stable solution viscosity. Furthermore, the water resistance of 3-isocyanatoalkylalkoxysilane and 1,3,5-tris(3-trialkoxysilylalkyl)isocyanurate is equivalent.

1,3,5-Tris(3-trialkoxysilylalkyl)isocyanurate is sometimes produced by thermal condensation of 3-isocyanate propyl alkoxysilane, and while the raw material 3-isocyanate propyl alkoxysilane may be present, this does not pose any particular problem. More preferably, it is 1,3,5-tris(3-trialkoxysilylpropyl)isocyanurate, and even more preferably, 1,3,5-tris(3-trimethoxysilylpropyl)isocyanurate. The methoxy groups have a rapid hydrolysis rate, and compounds containing propyl groups are relatively inexpensive to obtain; therefore, 1,3,5-tris(3-trimethoxysilylpropyl)isocyanurate is practically advantageous.

Furthermore, the coating agent may optionally include an isocyanate compound, a dispersant, a stabilizer, a viscosity modifier, a colorant, or other known additives as long as the gas barrier properties are not impaired.

The thickness of the gas barrier coating layer is preferably 50 to 1000 nm, and more preferably 100 to 500 nm. When the thickness of the gas barrier coating layer is 50 nm or more, a more sufficient gas barrier property tends to be achieved, and when it is 1,000 nm or less, sufficient flexibility tends to be maintained.

The coating solution for forming the gas barrier coating layer can be applied by methods such as dipping, roll coating, gravure coating, reverse gravure coating, air knife coating, comma coating, die coating, screen printing, spray coating, and gravure offset coating. The coating film formed by applying this coating solution can be dried by methods such as hot air drying, hot roll drying, high-frequency irradiation, infrared irradiation, UV irradiation, or a combination thereof.

The drying temperature for the above coating film can be, for example, 50 to 150°C, preferably 70 to 100°C. By setting the drying temperature within the above range, cracks in the inorganic oxide layer and the gas barrier coating layer can be further suppressed, enabling the exhibition of excellent barrier properties.

The gas barrier coating layer may be formed using a coating agent containing a polyvinyl alcohol-based resin and a silane compound. The coating agent may optionally include an acid catalyst, an alkali catalyst, a photoinitiator, or the like as needed.

The polyvinyl alcohol-based resin is as described above. Examples of silane compounds include silane coupling agents, polysilazanes, and siloxanes. Specific examples include tetramethoxysilane, tetraethoxysilane, glycidoxypropyltrimethoxysilane, acryloxypropyltrimethoxysilane, and hexamethyldisilazane.

### (Printing Layer)

A printing layer may be provided on the side of the first base film of the second base film. The printing layer is provided on a position visible from the outside of the laminate for the purpose of displaying information about the contents, identifying the contents, or enhancing the design of the packaging bag. A printing method and a print ink are not particularly limited and are suitably selected from known printing methods and print inks in consideration of printing suitability with respect to a film, design such as a color tone, adhesive properties, and safety as a food container. Regarding a printing method, for example, a gravure printing method, an offset printing method, a gravure offset printing method, a flexographic printing method, an inkjet printing method, or the like can be used. Among these, from a viewpoint of productivity and a high definition of a pattern, a gravure printing method can be preferably used.

In order to improve adhesion to the printing layer, various pretreatments such as corona treatment, plasma treatment, and flame treatment may be performed on the surface of the first base film side of the second base film, or a coated layer such as an easy-adhesive layer may be provided.

### <Package>

The package is formed from the above packaging material, and there is no particular limitation on the bag-making method. For example, the above packaging material (laminate) can be used for flat bags, three-sided bags, fin-seal bags, gusseted bags, standing pouches, pouches with spouts, pouches with beaks, etc., using a sealant film as a sealing material.

### [Example]

Hereinafter, the present invention will be described in detail below using examples and comparative examples, but the present invention is not limited to the following examples.

### <Preparation of Sealant Film>

As materials for the first layer and the third layer, the following propylene homopolymer (A), propylene-ethylene random copolymer (B), and ethylene-α-olefin copolymer elastomer (C) were prepared.

### (Propylene Homopolymer (A))

A propylene homopolymer having a melting onset temperature of 153°C and a melting point of 159°C as measured by differential scanning calorimetry (JIS K 7121), and a melt flow rate (MFR: ISO 1133) of 3.0 g/10 min (temperature 230°C, load 2.16 kg).

### (Propylene-ethylene Random Copolymer (B))

A propylene-ethylene random copolymer with a melting point of 147°C and an ethylene content of 3.4 mass%, as determined by differential scanning calorimetry (JIS K 7121).

Measurement of the ethylene content was performed according to an ethylene content quantification method (IR method) described on pages 412 to 413 of the Polymer Analysis Handbook (May 10, 2013, 3rd printing) edited by the Polymer Analysis Council of the Japan Society for Analytical Chemistry.

### (Ethylene-α-olefin Copolymer Elastomer (C))

An ethylene-1-butene copolymer elastomer, Tafmer A-1085S (trade name, manufactured by Mitsui Chemicals, Inc.), was used. The melt flow rate (MFR: ISO 1133) (temperature 190°C, load 2.16 kg) was 1.2 g/10 min, the density was 885 kg/m³, and the content of structural units derived from ethylene was 84 mass%.

As materials used in the second layer (concealing layer), the following propylene-ethylene block copolymer (D), ethylene-propylene copolymer elastomer (E), and titanium oxide (F) were prepared.

### (Propylene-ethylene Block Copolymer (D))

The melt flow rate (MFR: ISO 1133) (temperature 230°C, load 2.16 kg) is 1.8 g/10 min, containing 81.5 mass% propylene polymer and 18.5 mass% ethylene-propylene copolymer, with an ethylene content of 36.2 weight% in the ethylene-propylene copolymer, which is a propylene-ethylene block copolymer.

### (Ethylene-propylene Copolymer Elastomer (E))

The melt flow rate (MFR: ISO 1133) (temperature 230°C, load 2.16 kg) is 0.6 g/10 min, and the mass ratio of propylene content to ethylene content is 2.7 in the ethylene-propylene copolymer elastomer.

### (Titanium Oxide (F))

Titanium oxide, PEONY HP WHITE series, model number: L-11232-MPT manufactured by DIC Corporation.

### (Example 1)

For forming the first layer, a resin mixture was prepared by mixing 20.0 parts by mass of the propylene homopolymer (A) and 80.0 parts by mass of the propylene-ethylene random copolymer (B) in pellet form. To this resin mixture, 17.6 parts by mass of ethylene-α-olefin copolymer elastomer (C) was added based on 100 parts by mass total of the propylene homopolymer (A) and the propylene-ethylene random copolymer (B).

The resin mixture was fed into an extruder temperature-controlled at 250°C, melt-kneaded, and extruded through a T-die equipped with a feed block to produce the sealant film of Example 1 with a first layer thickness of 60 µm.

### (Examples 2 to 4 and Comparative Examples 1 and 2)

Except for changing the mixing ratios of each raw material compound as shown in Table 1, the film was produced in the same manner as in Example 1.

### (Example 5)

For forming the first layer, a resin mixture was prepared by mixing 20.0 parts by mass of the propylene homopolymer (A) and 80.0 parts by mass of the propylene-ethylene random copolymer (B) in pellet form. To this resin mixture, 17.6 parts by mass of the ethylene-α-olefin copolymer elastomer (C) was added based on 100 parts by mass total of the propylene homopolymer (A) and the propylene-ethylene random copolymer (B).

For forming the second layer, a resin mixture was prepared by mixing the propylene-ethylene block copolymer (D) and the ethylene-propylene copolymer elastomer (E) in pellet form such that the mass ratio of elastomer (E) to block copolymer (D) [(E)/(D)] was 0.43.

Each resin mixture was fed into an extruder temperature-controlled at 250°C, melt-kneaded, and laminated using a T-die extruder equipped with a feed block so that the thickness of the first layer was 10 µm and the thickness of the second layer was 50 µm, thereby producing the sealant film of Example 5.

### (Examples 6 to 8 and Comparative Examples 3 and 4)

Except for changing the mixing ratios of each raw material compound as shown in Table 2, the film was produced in the same manner as in Example 5.

### (Example 9)

For forming the first layer, a resin mixture was prepared by mixing 20.0 parts by mass of the propylene homopolymer (A) and 80.0 parts by mass of the propylene-ethylene random copolymer (B) in pellet form. To this resin mixture, 17.6 parts by mass of ethylene-α-olefin copolymer elastomer (C) was added based on a total of 100 parts by mass of the propylene homopolymer (A) and the propylene-ethylene random copolymer (B).
For forming the second layer, a resin mixture was prepared by mixing the propylene-ethylene block copolymer (D) and the ethylene-propylene copolymer elastomer (E) in pellet form such that the mass ratio of the ethylene-propylene copolymer elastomer (E) to the propylene-ethylene block copolymer (D) [(E)/(D)] was 0.43. The titanium oxide (F) is added to this resin mixture in a quantity of 7.5 mass% based on the total mass of the second layer.
Each resin mixture was fed into an extruder temperature-controlled at 250°C, melt-kneaded, and laminated using a T-die extruder equipped with a feed block so that the thickness of the first layer was 10 µm and the thickness of the second layer was 50 µm, thereby producing the sealant film of Example 9.

### (Examples 10 to 12 and Comparative Examples 5 and 6)

Except for changing the mixing ratios of each raw material compound as shown in Table 3, the film was produced in the same manner as in Example 9.

### (Example 13)

For forming the first layer and the third layer, a resin mixture was prepared by mixing 11.8 parts by mass of the propylene homopolymer (A) and 88.2 parts by mass of the propylene-ethylene random copolymer (B) in pellet form. To this resin mixture, 17.6 parts by mass of ethylene-α-olefin copolymer elastomer (C) was added based on 100 parts by mass total of the propylene homopolymer (A) and the propylene-ethylene random copolymer (B).
For forming the second layer, a resin mixture was prepared by mixing the propylene-ethylene block copolymer (D) and the ethylene-propylene copolymer elastomer (E) in pellet form such that the mass ratio of elastomer (E) to block copolymer (D) [(E)/(D)] was 0.43. The titanium oxide (F) is added to this resin mixture in a quantity of 7.5 mass% based on the total mass of the second layer.
Each resin mixture was fed into an extruder temperature-controlled at 250°C, melt-kneaded, and laminated using a T-die extruder equipped with a feed block so that the thicknesses of the first and third layers were each 10 µm and the thickness of the second layer was 40 µm, thereby producing the sealant film of Example 1.

### (Examples 14 to 16 and Comparative Examples 7 and 8)

Except for changing the mixing ratios of each raw material compound as shown in Table 4, the film was produced in the same manner as in Example 13.

### <Various Evaluations>

Evaluations as below were performed for the films of the examples. The results are shown in Tables 1 to 4.

### [Drop Bag Resistance Evaluation]

The first layers of the films obtained in each example were placed facing each other, and heat-sealed using a heat sealer manufactured by TESTER SANGYO CO,. LTD. under conditions of a sealing pressure of 0.2 MPa, a sealing time of 1 second, a sealing width of 5 mm, and a sealing temperature of 150°C, to produce packaging bags with three sides heat-sealed, leaving one short side. The size of the packaging bag was 180 mm × 130 mm. After filling the obtained packaging bag with 150 mL of water, the one side that had not been heat-sealed was heat-sealed to produce a water-filled bag. This water-filled bag was retorted at 127°C for 50 minutes and then stored at a low temperature of 5°C for 72 hours. Thereafter, the water-filled bag was stood vertically with respect to the floor, with the initially heat-sealed short side facing downward, and tested by repeatedly dropping it onto the floor 100 times from a height of 100 cm. The test was conducted on a total of 10 bags, and the proportion of bags that did not break (survival rate) was evaluated. A survival rate of 60% or higher was evaluated as indicating good drop bag resistance during low-temperature storage.

### [Evaluation of Low-Temperature Sealability]

The first layers of the films obtained in each example were placed facing each other, and heat-sealed using a heat sealer manufactured by TESTER SANGYO CO,. LTD. under conditions of a sealing pressure of 0.2 MPa, a sealing time of 1 second, and a sealing width of 5 mm. The sealing temperature was adjusted in 2°C increments within the range of 140°C to 160°C. Thereafter, the heat-sealed film at each temperature was cut into 15 mm width×80 mm, and T-shaped peeling was performed at a tensile speed of 300 mm/min to measure the heat seal strength of the heat-sealed portion using a tensile tester manufactured by Shimadzu Corporation. The temperature at which the heat seal strength reached 15 N/15 mm or more was defined as the heat seal initiation temperature. The lower the heat seal initiation temperature, the better the low-temperature sealability.

### [Heat Resistance Evaluation]

The first layers of the films obtained in each example were placed facing each other, and heat-sealed using a heat sealer manufactured by TESTER SANGYO CO,. LTD. under the conditions of a sealing pressure of 0.05 MPa, a sealing time of 30 seconds, a sealing width of 10 mm, and a sealing temperature of 128°C. Thereafter, the heat-sealed film was cut into 15 mm width × 80 mm, and T-shaped peeling was performed at a tensile speed of 300 mm/min to measure a heat fusion strength of the heat seal portion using a tensile tester manufactured by Shimadzu Corporation. The lower the heat fusion strength, the better the heat resistance.

### [Concealing Property Evaluation]

Among the films obtained in each example, for the films produced by adding titanium oxide to the second layer, the transmission density was measured using a portable transmission densitometer (Model No. 341C) manufactured by X-Rite, Inc. Here, the transmission density is a value defined as -log₁₀(I/I0), where I0 is the incident light flux and I is the transmitted light flux. A higher whiteness of the film results in a greater value. When the value of the transmission density is 0.2 or more, the concealing property of the film is determined to be good.

### <Evaluation Results>

### (Examples 1 to 4 and Comparative Examples 1 and 2)

The films of Examples 1 to 4 and Comparative Examples 1 and 2, each having only the first layer, were subjected to drop bag resistance evaluation, low-temperature sealability evaluation, and heat resistance evaluation. As shown in Table 1, it was confirmed that all of the films exhibited good low-temperature sealability and heat resistance. It was also confirmed that the films of Examples 1 to 4 exhibited good drop bag resistance. In comparison, the films of Comparative Examples 1 and 2 did not exhibit good drop bag resistance due to the low amount of the ethylene-α-olefin copolymer elastomer added.

In addition, the film of Example 4 exhibited a relatively high heat fusion strength value due to the high amount of ethylene-α-olefin copolymer elastomer added. From the viewpoint of more easily suppressing fusion on the inner surface of the packaging bag after pressure and heat treatment under retort conditions at 128°C, it was determined that a heat fusion strength of less than 5N is more preferable. Therefore, from the viewpoint of heat resistance, it is considered more preferable to set the amount of the ethylene-α-olefin copolymer elastomer added to 43 parts by mass or less, based on 100 parts by mass of the total amount of the propylene homopolymer and the propylene-ethylene random copolymer. On the other hand, if the retort conditions are at a lower temperature, sufficient heat resistance can be exhibited to suppress fusion on the inner surface of the packaging bag, and therefore, this is not necessarily the case.

### (Examples 5 to 8 and Comparative Examples 3 and 4)

For the films of Examples 5 to 8 and Comparative Examples 3 to 4, which include the first layer and the second layer, drop bag resistance evaluation, low-temperature sealability evaluation, and heat resistance evaluation were conducted. As shown in Table 2, it was confirmed that all of the films exhibited good low-temperature sealability. It was confirmed that the films of Examples 5 to 8 also exhibited good drop bag resistance and heat resistance. In comparison, the films of Comparative Examples 3 and 4 did not exhibit good drop bag resistance due to the low amount of the ethylene-α-olefin copolymer elastomer added.

### (Examples 9 to 12 and Comparative Examples 5 and 6)

The films of Examples 9 to 12 and Comparative Examples 5 and 6, each including a first layer and a second layer and containing titanium oxide in the second layer, were subjected to evaluations of drop bag resistance, low-temperature sealability, heat resistance, and concealing properties. As shown in Table 3, it was confirmed that all of the films exhibited good low-temperature sealability and concealing properties. It was confirmed that the films of Examples 9 to 12 also exhibited good drop bag resistance and heat resistance. In comparison, the films of Comparative Examples 5 and 6 did not exhibit good drop bag resistance due to the low amount of the ethylene-α-olefin copolymer elastomer added.

### (Examples 13 to 16 and Comparative Examples 7 and 8)

The films of Examples 13 to 16 and Comparative Examples 7 and 8, each including a first layer, a second layer, and a third layer and containing titanium oxide in the second layer, were subjected to evaluations of drop bag resistance, low-temperature sealability, heat resistance, and concealing properties. As shown in Table 4, it was confirmed that all of the films exhibited good low-temperature sealability and concealing properties. It was confirmed that the films of Examples 13 to 16 also exhibited good drop bag resistance and heat resistance. In comparison, the films of Comparative Examples 7 and 8 did not exhibit good drop bag resistance due to the low amount of the ethylene-α-olefin copolymer elastomer added.

**[Table 1]**

| | | | Comparative Example 1 | Comparative Example 2 | Example 1 | Example 2 | Example 3 | Example 4 |
|---|---|---|---|---|---|---|---|---|
| Thickness | First Layer | (µm) | 60 | 60 | 60 | 60 | 60 | 60 |
| First Layer Composition | Resin (A) | (parts by mass) | 20.0 | 20.0 | 20.0 | 20.0 | 20.0 | 20.0 |
| | Resin (B) | (parts by mass) | 80.0 | 80.0 | 80.0 | 80.0 | 80.0 | 80.0 |
| | Resin (C) | (parts by mass) | 0.0 | 15.0 | 17.6 | 30.0 | 43.0 | 50.0 |
| Survival Rate after Drop Bag Test | | (%) | 0 | 30 | 60 | 70 | 80 | 80 |
| Heat Seal Initiation Temperature | | (°C) | 146 | 146 | 146 | 146 | 146 | 144 |
| Heat Fusion Strength | | (N/15 mm) | 1.2 | 2.1 | 2.9 | 2.7 | 3.3 | 5.1 |

**[Table 2]**

| | | | Comparative Example 3 | Comparative Example 4 | Example 5 | Example 6 | Example 7 | Example 8 |
|---|---|---|---|---|---|---|---|---|
| Thickness | Total | (µm) | 60 | 60 | 60 | 60 | 60 | 60 |
| | First Layer | (µm) | 10 | 10 | 10 | 10 | 10 | 10 |
| | Second Layer | (µm) | 50 | 50 | 50 | 50 | 50 | 50 |
| First Layer Composition | Resin (A) | (parts by mass) | 20.0 | 20.0 | 20.0 | 20.0 | 20.0 | 20.0 |
| | Resin (B) | (parts by mass) | 80.0 | 80.0 | 80.0 | 80.0 | 80.0 | 80.0 |
| | Resin (C) | (parts by mass) | 0.0 | 15.0 | 17.6 | 30.0 | 43.0 | 50.0 |
| Second Layer Composition | Resin (E)/Resin (D) (mass ratio) | (-) | 0.43 | 0.43 | 0.43 | 0.43 | 0.43 | 0.43 |
| Survival Rate after Drop Bag Test | | (%) | 0 | 40 | 60 | 70 | 80 | 80 |
| Heat Seal Initiation Temperature | | (°C) | 146 | 146 | 146 | 146 | 146 | 144 |
| Heat Fusion Strength | | (N/15 mm) | 2.1 | 2.9 | 3.0 | 3.6 | 3.9 | 5.0 |

**[Table 3]**

| | | | Comparative Example 5 | Comparative Example 6 | Example 9 | Example 10 | Example 11 | Example 12 |
|---|---|---|---|---|---|---|---|---|
| Thickness | Total | (µm) | 60 | 60 | 60 | 60 | 60 | 60 |
| | First Layer | (µm) | 10 | 10 | 10 | 10 | 10 | 10 |
| | Second Layer | (µm) | 50 | 50 | 50 | 50 | 50 | 50 |
| First Layer Composition | Resin (A) | (parts by mass) | 20.0 | 20.0 | 20.0 | 20.0 | 20.0 | 20.0 |
| | Resin (B) | (parts by mass) | 80.0 | 80.0 | 80.0 | 80.0 | 80.0 | 80.0 |
| | Resin (C) | (parts by mass) | 0.0 | 15.0 | 17.6 | 30.0 | 43.0 | 50.0 |
| Second Layer Composition | Resin (E)/Resin (D) (mass ratio) | (-) | 0.43 | 0.43 | 0.43 | 0.43 | 0.43 | 0.43 |
| | Titanium Oxide (F) | (mass%) | 7.5 | 7.5 | 7.5 | 7.5 | 7.5 | 7.5 |
| Survival Rate after Drop Bag Test | | (%) | 0 | 30 | 60 | 70 | 70 | 70 |
| Heat Seal Initiation Temperature | | (°C) | 146 | 146 | 146 | 146 | 146 | 144 |
| Heat Fusion Strength | | (N/15 mm) | 2.2 | 3.1 | 3.2 | 3.7 | 4.2 | 5.1 |
| Transmission Density | | (-) | 0.41 | 0.43 | 0.44 | 0.43 | 0.42 | 0.44 |

**[Table 4]**

| | | | Comparative Example 7 | Comparative Example 8 | Example 13 | Example 14 | Example 15 | Example 16 |
|---|---|---|---|---|---|---|---|---|
| Thickness | Total | (µm) | 60 | 60 | 60 | 60 | 60 | 60 |
| | First Layer | (µm) | 10 | 10 | 10 | 10 | 10 | 10 |
| | Second Layer | (µm) | 40 | 40 | 40 | 40 | 40 | 40 |
| | Third Layer | (µm) | 10 | 10 | 10 | 10 | 10 | 10 |
| First Layer Composition | Resin (A) | (parts by mass) | 10.0 | 11.1 | 11.8 | 12.5 | 14.3 | 15.4 |
| | Resin (B) | (parts by mass) | 90.0 | 88.9 | 88.2 | 87.5 | 85.7 | 84.6 |
| | Resin (C) | (parts by mass) | 0.0 | 11.1 | 17.6 | 25.0 | 42.9 | 53.8 |
| Second Layer Composition | Resin (E)/Resin (D) (mass ratio) | (-) | 0.43 | 0.43 | 0.43 | 0.43 | 0.43 | 0.43 |
| | Titanium Oxide (F) | (mass%) | 7.5 | 7.5 | 7.5 | 7.5 | 7.5 | 7.5 |
| Third Layer Composition | Resin (A) | (parts by mass) | 10.0 | 11.1 | 11.8 | 12.5 | 14.3 | 15.4 |
| | Resin (B) | (parts by mass) | 90.0 | 88.9 | 88.2 | 87.5 | 85.7 | 84.6 |
| | Resin (C) | (parts by mass) | 0.0 | 11.1 | 17.6 | 25.0 | 42.9 | 53.8 |
| Survival Rate after Drop Bag Test | | (%) | 0 | 40 | 70 | 80 | 80 | 60 |
| Heat Seal Initiation Temperature | | (°C) | 142 | 144 | 144 | 144 | 142 | 142 |
| Heat Fusion Strength | | (N/15 mm) | 1.7 | 3.0 | 3.5 | 3.9 | 4.5 | 5.5 |
| Transmission Density | | (-) | 0.38 | 0.40 | 0.40 | 0.39 | 0.39 | 0.40 |

### Industrial Applicability

The sealant film of the present invention, while being a polypropylene-based film, is capable of achieving both low-temperature sealability and drop bag resistance during low-temperature storage at a high level. Therefore, the sealant film of the present invention can be suitably used in polypropylene-based monomaterial packaging materials (retort packaging materials).

### Reference Signs List

1 Second layer, 2 Third layer, 3 Adhesive layer, 4 Base film, 10 First layer, 100 to 102 Sealant film, 200 to 202 Packaging material

## Claims

1. A sealant film comprising:
a first layer that comprises a propylene homopolymer (A), a propylene-ethylene random copolymer (B), and an ethylene-α-olefin copolymer elastomer (C), wherein
a content of the ethylene-α-olefin copolymer elastomer (C) is 17.5 parts by mass or more relative to a total of 100 parts by mass of the propylene homopolymer (A) and the propylene-ethylene random copolymer (B).

2. The sealant film according to claim 1, comprising:
the first layer; and
a second layer comprising a propylene-ethylene block copolymer (D) and an ethylene-propylene copolymer elastomer (E).

3. The sealant film according to claim 1, comprising:
the first layer; and
a second layer comprising a propylene-based polymer and titanium oxide.

4. The sealant film according to claim 2, comprising, in this order:
the first layer;
the second layer; and
a third layer comprising a propylene homopolymer (A) and a propylene-ethylene random copolymer (B).

5. The sealant film according to claim 3, comprising, in this order:
the first layer;
the second layer; and
a third layer comprising a propylene homopolymer (A) and a propylene-ethylene random copolymer (B).

6. The sealant film according to claim 1, wherein
the content of the ethylene-α-olefin copolymer elastomer (C) is 17.5 to 43 parts by mass based on a total of 100 parts by mass of the propylene homopolymer (A) and the propylene-ethylene random copolymer (B).

7. A packaging material comprising:
the sealant film according to any one of claims 1 to 6; and
a base film comprising a propylene-based polymer.

8. The packaging material according to claim 7, wherein the base film has an inorganic oxide layer on at least one surface thereof.

9. A packaging material comprising, in this order:
the sealant film according to any one of claims 1 to 6;
a first base film comprising a propylene-based polymer; and
a second base film comprising a propylene-based polymer, wherein
the first base film has an inorganic oxide layer on at least one surface thereof.

10. A package formed from the packaging material according to claim 7.
